(19) **Europäisches Patentamt**

**European Patent Office**

**Office européen des brevets**

(11) **EP 1 278 703 B1**

(12) **EUROPEAN PATENT SPECIFICATION**

(45) Date of publication and mention
of the grant of the patent:
**01.09.2004 Bulletin 2004/36**

(51) Int Cl.⁷: $C02F\ 5/10$, $C11D\ 3/22$

(21) Application number: **01923990.4**

(86) International application number:
**PCT/NL2001/000300**

(22) Date of filing: **17.04.2001**

(87) International publication number:
**WO 2001/079122 (25.10.2001 Gazette 2001/43)**

(54) **SEQUESTERING**

**SEQUESTRIERUNG**

**SEQUESTRATION**

(84) Designated Contracting States:
**AT BE CH CY DE DK ES FI FR GB GR IE IT LI LU MC NL PT SE TR**

(30) Priority: **19.04.2000 NL 1014985**

(43) Date of publication of application:
**29.01.2003 Bulletin 2003/05**

(73) Proprietor: **Koninklijke Coöperatie Cosun U.A. 4814 ND Breda (NL)**

(72) Inventors:
• **KUZEE, Hendrika, Cornelia**
  **NL-4388 CB Oost-Souburg (NL)**

• **RAAIJMAKERS, Henricus, Wilhelmus, Carolina**
  **NL-4708 HD Roosendaal (NL)**

(74) Representative:
**Prins, Adrianus Willem, Mr. Ir. et al Vereenigde,**
**Nieuwe Parklaan 97**
**2587 BN Den Haag (NL)**

(56) References cited:
**WO-A-98/25972          WO-A-99/64551**
**WO-A-99/64716**

**Description**

The invention relates to a method for sequestering metal ions at low pH. The invention further concerns cleaning compositions having a sequestering action.

Sequestering agents are substances which can enter into a strong interaction with metal ions, for instance in aqueous solutions. For that reason, they can be used to prevent formation of precipitate or deposit of metal ion salts, or even remove deposit already formed. Another important use of sequestering agents is, for instance, the control of the hardness of water. Examples of substances which are often used as sequestering agent are ethylenediaminetetraacetic acid (EDTA), nitrilotriacetic acid (NTA), citric acid and the like.

An important disadvantage of many of the known sequestering agents is their often very limited biodegradability and the limited pH range in which they are effective. When discharged with the waste water, remobilization of heavy metals can take place, which is undesired. Moreover, an additional drawback of NTA is the substantial toxicity of the substance.

In a large number of industrial cleaning processes, use is made of an alkaline cleaning with, generally, EDTA as sequestering agent. What can be thought of is the cleaning of milk pasteurizers (the so-called Cleaning In Place), the cleaning of membranes and the cleaning of printing presses. For instance, in the international patent application 99/15256, the cleaning of membrane filters under alkaline conditions (pH 10-12) is described. The principle of the cleaning is based on the sequestering of, in particular, calcium ions. As sequestering agents, EDTA, NTA, phosphates and polydicarboxylic polysaccharides are mentioned. A drawback of this method is formed by the highly alkaline conditions which are necessary. On the one hand, this entails safety risks for personnel charged with the execution of the cleaning processes; on the other hand, it appears that some calcium salts, particularly calcium humic acid compounds, are relatively hard to sequester under these conditions. Moreover, the alkaline conditions are detrimental to the life span of the membrane filters.

WO/98/25972 relates to fruclan-carboxylic acids which may e.g. be used for Ca-binding The only method described for this purpose requires the use of an inulin-polycarboxylate-salt in a strongly alkaline solution (pH 10.0; see Example 2).

For removing the calcium carbonate deposit ('lime'), in practice, use is often made of cleaning agents with a slightly acid to acid pH. In the US patent specifications 5,454,981 and 4,891,150, for example, thickened, liquid detergent compositions are described, in which use is made of organic acids, such as citric acid. The function of these acids is mainly directed towards setting the pH of the composition. Although it is mentioned that these organic acids would still have a calcium binding effect at a pH of approximately 3, measurements have shown that organic acids, such as citric acid, do not exhibit any sequestering action at a pH lower than 6.

Surprisingly, it has now appeared that, in contrast to most commercially used sequestering agents, certain fructan polycarboxylic acids have a sequestering action at a low pH. Thus, the invention relates to a method for sequestering metal ions at a pH lower than 6, wherein, as sequestering agent, a fructan polycarboxylic acid containing on average at least 0.05 carboxyl groups per monosaccharide unit is used.

A fructan polycarboxylic acid containing on average at least 0.05 carboxyl groups per monosaccharide unit has proven capable of sequestering metal ions in an efficient manner. An additional advantage of the sequestering agent used according to the invention is its biodegradability. Additionally, fructan polycarboxylic acids are non-toxic, so that they do not entail any hazards to man and the environment.

As stated, according to the invention, a fructan polycarboxylic acid containing on average at least 0.05 carboxyl groups per monosaccharide unit is used as sequestering agent. Depending on the nature of the fructan polycarboxylic acid, the number of carboxyl groups per monosaccharide unit of the fructan polycarboxylic acid can be expressed in the total degree of substitution of carboxyl groups (DS) or the total degree of oxidation (DO). Preferably, the fructan polycarboxylic acid to be used contains between 0.5 and 3 carboxyl groups per monosaccharide unit. It will, for that matter, be clear that, according to the invention, it is also possible to use mixtures of different fructan polycarboxylic acids.

What is understood by a fructan polycarboxylic acid is any oligo- or polysaccharide containing a plurality of anhydrofructan units and which has been converted into a polycarboxylic acid. The fructans on which a fructan polycarboxylic acid can be based can have a polydisperse chain length distribution, and can have a straight or branched chain. Preferably, the fructans contain chiefly β-2,1 bonds, as in inulin, but they can also contain β-2,6 bonds, as in levan. Suitable fructans can originate directly from a natural source, but they can also have undergone a modification. Examples of modifications in this context are reactions known per se which lead to a lengthening or shortening of the chain length. Suitable fructans have an average chain length (degree of polymerization, DP) of at least 2 up to about 1000. Preferably, a fructan is used with a degree of polymerization of at least 3, more preferably at least 6, most preferably at least 10 up to about 60.

Fructans on which a fructan polycarboxylic acid can be based for use in a method according to the invention include, in addition to naturally occurring polysaccharides, industrially prepared polysaccharides, such as hydrolysis products, which have shortened chains, and fractioned products having a modified chain length, in particular a chain length of at least 10. A hydrolysis reaction for obtaining a fructan with a shorter chain length can be carried out enzymatically (for instance with endoinulinase), chemically (for instance with aqueous acid), physically (for instance thermally) or by the use of heterogeneous catalysis (for instance with an acid ion exchanger). Fractionation of fructans, such as inulin, can be accomplished, for instance, by crystallization at low temperature, separation with column chromatography, membrane filtration and selective precipitation with an alcohol. Other fructans, such as fructans having a long chain, can be obtained, for instance, by crystallization, from fructans from which mono- and disaccharides have been removed, and fructans whose chain length has been enzymatically extended can also serve as a basis for a fructan polycarboxylic acid that is used in the present method. Furthermore, reduced fructans can be used. These are fructans whose reducing terminal groups, normally fructose groups, have been reduced, for instance with sodium borohydride or hydrogen in the presence of a transition metal catalyst. Also eligible for use are fructans which have been chemically modified, such as crosslinked fructans and hydroxyalkylated fructans.

In a preferred embodiment, the fructan polycarboxylic acid which is used according to the invention is based on inulin. Inulin is a polysaccharide consisting of β-2,1 bound fructose units with an α-D-glucopyranose unit at the reducing end of the molecule. This substance occurs, inter alia, in the roots and tubers of plants of the *Liliaceae* and *Compositae* families. The most important sources for the production of inulin are the Jerusalem artichoke, the dahlia, and the chicory root. In the industrial production of inulin, the starting material is mainly chicory root. The principal difference between inulin originating from the different natural sources resides in the degree of polymerization. This can vary from about 6 in Jerusalem artichokes to 10-14 in chicory roots and higher than 20 in dahlias. According to the invention, it is preferred to use a fructan polycarboxylic acid having a degree of polymerization of 9-11.

The derivatives of inulin which are used according to the invention are polycarboxylates. Known, suitable polycarboxylate derivatives of inulin are dicarboxy inulin, obtained, for instance, by glycolitic oxidation of inulin, 6-carboxy inulin, obtained, for instance, by selective oxidation of the primary hydroxyl groups of inulin (TEMPO oxidation), carboxymethyl inulin, carboxyethyl inulin, obtained, for instance, by cyanoethylation followed by hydrolysis. Derivatives of inulin which are preferably used are dicarboxy inulin, carboxymethyl inulin and carboxyethyl inulin.

Further, it is possible to use fructan polycarboxylic acids containing carboxyl groups obtained by oxidation of carbon atoms forming part of the anhydrofructose units in the molecule, as well as carboxyl groups obtained by attachment of carboxyalkyl or carboxyacyl groups to the anhydrofructose units. These twofold modified fructan polycarboxylic acids can be prepared by oxidizing a fructan in a known manner, followed by carboxyalkylation or carboxyacylation of the oxidation product in a known manner. It is also possible to change this order around and to have carboxyalkylation or carboxyacylation precede oxidation. The carboxymethylation can be carried out, for instance, with sodium monochloroacetate in water at a pH of 10-13, or with another haloacetic acid derivative. Dicarboxymethylation can be carried out in a comparable manner, for instance by reaction with a halomalonate ester, followed by hydrolysis. Carboxyacylation can be carried out with an anhydride or another reactive derivative of a polycarboxylic acid, such as succinic acid or maleic acid anhydride. The oxidation can be carried out in different ways, for instance utilizing hypohalite, periodate/chlorite or hydrogen peroxide, which in each case leads mainly to dicarboxyl groups ($C_3$-$C_4$ cleavage), or utilizing hypochlorite/TEMPO, which leads to monocarboxyl groups ($C_6$ oxidation). Oxidation whereby $C_3$-$C_4$ cleavage occurs is preferred.

Wherever in this text and the appended claims reference is made to carboxylic acids, these are always understood to include both the free acid and metal or ammonium salts of the carboxylic acid. The term carboxyalkyl refers to a $C_1$-$C_4$ alkyl group substituted by one or more carboxyl groups, such as carboxymethyl, carboxyethyl, dicarboxymethyl, 1,2-dicarboxyethyl and the like. The term carboxyacyl refers to a $C_1$-$C_4$ acyl group, in particular a $C_1$-$C_4$ alkanoyl or alkenoyl group substituted by one or more carboxyl groups, such as carboxyacetyl, β-carboxypropionyl, β-carboxyacryloyl, γ-carboxybutyryl, dicarboxyhydroxybutyryl, and the like. As regards the arboxyalkyl and carboxyacyl groups, a preference is expressed for carboxymethyl.

The metal ions which can be complexed with a sequestering agent in a method according to the invention are, in principle, all metal ions which are commonly sequestered. Typical examples of what is involved in most cases are calcium and magnesium ions and combinations thereof.

In order to sequester the metal ions, it typically suffices to contact these with the sequestering agent. As a rule, this will be done by using an aqueous solution of the sequestering agent.

Further, it has appeared that a method for sequestering according to the invention can be very suitably combined with a variety of cleaning processes. Hereby, it is not only prevented that a deposit is formed by salts of metal ions; it is also possible to remove deposit already formed. Therefore, the invention also relates to a cleaning composition with a pH lower than 6, comprising a fructan polycarboxylic acid which contains, on average, at least 0.05 carboxyl groups per monosaccharide unit, as a sequestering agent.

Examples of uses wherein it has appeared particularly advantageous to use a fructan polycarboxylic acid as sequestering agent are detergents, bathroom cleaners, (antistatic) plastics cleaners, washing up liquids, cleaners for cleaning-in-place processes, membrane cleaners and printing press cleaners. Preferably, in such a composition, an amount of 0.5 to 20, preferably from 1 to 10 % by weight, based on the weight of the cleaning composition, of the sequestering agent is incorporated.

In addition to the sequestering agent mentioned, a cleaning composition according to the invention will contain a number of conventional ingredients. Moreover, an organic or inorganic acid will be present to adjust the pH below 6. In the following, a description will be given of some typical examples, often without mentioning the sequestering agent or the acid which is, naturally, present. These should not in any way be understood to be restrictive. Based on his usual knowledge, the skilled person will be capable of implementing different modifications and adaptations without thereby adversely affecting the advantageous effect of the sequestering agent used.

A bathroom cleaner will usually comprise one or more surfactants, an acid and water. Optionally, odorants and/or a biocidal substance can be incorporated. The surfactant can be present in an amount of 0.1 to 10 % by weight, based on the weight of the composition. The acid will typically be present in the same amount. For a detailed enumeration of suitable surfactants, reference is made to, for instance, US patent specification 4,891,150. The acid is preferably an organic acid. This makes it possible to give the cleaner a relatively high viscosity, so that the contact time with the surface to be cleaned is relatively long.

A typical example of a lavatory cleaner comprises myristyl dimethylaminoxide or a comparable surfactant (approximately 5 % by weight), a fatty alcohol having 12-14 carbon atoms (1-2 % by weight) and water. Here, the sequestering agent is preferably used in an amount of 5 to 15 % by weight.

An antistatic plastic cleaner will generally be based on a mixture of an alcohol, such as ethanol, and water. The weight ratio between these two solvents will generally be between 1:12 and 1:8. Additionally, often a small amount (for instance between 1 and 5 % by weight) of a surfactant, for instance cocoamidopropylaminoxide, will be present. Here, the sequestering agent is preferably used in an amount of 0.5 to 3 % by weight.

A composition for removing lime scale preferably has a pH of 2 to 3 and contains a surfactant, such as the magnesium salt of dodecyl sulfate, in an amount of 3-15 % by weight, in an aqueous solution. If desired, an odorant can be used, for instance in an amount of 0.1 - 1 % by weight. Here, the sequestering agent is preferably used in an amount of 5 to 8 % by weight.

A typical example of a washing-up liquid preferably contains a fatty alcohol ethyoxylate as surfactant in an aqueous solution, in which the surfactant will mostly be used in an amount of 15 - 25% by weight. Here, the sequestering agent is preferably used in an amount of 5 to 8 % by weight.

A composition for Cleaning In Place will be illustrated on the basis of a method for cleaning a milk pasteurizer. Conventionally, one-step or two-step processes are used. According to the one-step process, cleaning takes place with an alkaline composition with a very high pH. According to the two-step process, first, alkaline cleaning takes place with a 1% NaOH solution. After rinsing with demi-water, an acidic cleaning with 1% $HNO_3$ solution is carried out.

According to the invention, the starting point is an entirely new method in which the very high and very low pHs of the conventional methods are avoided. At a slightly acid pH of 3-5, a composition is used comprising between 1 and 10 % by weight of a fructan polycarboxylic acid according to the invention, in combination with a surfactant and sodium gluconate. These are used in amounts of 0.1-3 % by weight and 0.5-5 % by weight, respectively.

For a description of a composition for cleaning membranes, reference is made to the international patent application 99/15256. For this use, under certain circumstances, an acidic, aqueous solution of a fructan polycarboxylic acid according to the invention can suffice. The concentration of the fructan polycarboxylic acid can be selected to be between 3 and 15 % by weight. The acid can be an organic or an inorganic acid.

The invention will presently be further elucidated in and by the following examples.

***Example 1: bathroom cleaner***

General composition:

| Surfactant | 0.1-10% |
|---|---|
| Dicarboxy inulin with a degree of oxidation of 80 % | 0.1-10% |
| Perfume | maximum 0.5% |
| Water | balance |

Optionally, a biocide can be added to the cleaner so that an antibacterial cleaner is obtained. Dosage 0.5 - 2.5%.

Surfactants which can be used are:

1. Alkyl alcohol ether sulfates, such as, e.g. Na-lauryl ether sulfate (SLS)
2. Amphoteric surfactants
3. Nonionic surfactants
4. Amine oxides

### Example 2: Lavatory cleaner

Composition:

| | |
|---|---|
| Myristyl dimethylaminoxide | 5.0% |
| C12-C14 fatty alcohol. 6EO | 1.5% |
| Dicarboxy inulin with a degree of oxidation of 80% | 10.0% |
| Water | 83.5% |
| Mix all ingredients while stirring | |

### Example 3: Antistatic plastic cleaner

Composition:

| | |
|---|---|
| Cocoamidopropylaminoxide | 1.8% |
| Dicarboxy inulin with a degree of oxidation of 100% | 1.2% |
| Ethanol | 10.0% |
| Water | 87.0% |
| Mix all ingredients while stirring | |

### Example 4: lime scale ($CaCO_3$) remover

Composition:

| | |
|---|---|
| C12 alkyl sulfate, Mg salt | 6.0% |
| Dicarboxy inulin degree of oxidation 80% | 6.0% |
| Perfume | 0.4% |
| Water | balance |
| Product pH 2.5 | |

### Example 5: Acid rinsing agent dishwasher

Composition:

| | |
|---|---|
| Fatty alcohol ethoxylate | 15-25% |
| Dicarboxy inulin degree of oxidation 80% | 5-8% |
| Water | balance |
| Mix all ingredients while stirring | |

***Example 6: Calcium binding capacity at low pH***

*Method:*

The potential of standard solutions $10^{-3}$ and $10^{-5}$ M $Ca^{2+}$ (containing $5*10^{-3}$ M NaCl) is determined with the aid of a calcium selective electrode (Orion 93-20, reference electrode Orion 90-02Cl2). The pH of the standard solutions is brought to the desired pH with the aid of 0.1 M NaOH or 0.1 M HCl.

To 150 ml of the $10^{-3}$ calcium standard, whose pH is brought to the desired pH with the aid of 0.1 M NaOH or 0.1 M HCl, an amount of product is added such that the calcium concentration decreases to $10^{-5}$ M. The calcium binding capacity (CBC) is then calculated as follows:

$$CBC = [1000*(10^{-3} - 10^{-5})]/(1000*X/150) \text{ mmoles calcium/g product (100\% active)}$$

X = amount of product needed to reduce the calcium concentration to $10^{-5}$ M.

*Products tested:*

Dicarboxy inulin with degrees of oxidation (DO) of 60, 80 and 100%.
Carboxy methyl inulin with degrees of substitution (DS) of 2.0 and 2.5.
Sodium Iminodisuccinate (Bayer)
Trisodium citrate (Merck)
Lactic acid (Merck)
Tetrasodium EDTA (Dissolvine E39, AKZO)
NTA (Sigma)
Sodium tripolyphosphate (Hoechst)

*Results*

Calcium binding capacity (mmol calcium/ g product (100% active).

| Product | pH 4.0 | pH 4.5 | pH 5.0 | pH 5.5 | pH 6.0 | pH 8.0 | pH 10.0 | pH 12.0 |
|---|---|---|---|---|---|---|---|---|
| NaIminodisuccinate | <0.1 | - | - | - | <0.1 | <0.1 | 1.15 | 0.70 |
| Trisodium citrate | <0.1 | <0.1 | <0.1 | 0.10 | 0.20 | 0.95 | 1.00 | 0.45 |
| Lactic acid | - | - | - | <0.1 | <0.1 | <0.1 | <0.1 | <0.1 |
| CM 20 | - | - | 0.25 | 0.70 | 1.00 | 1.20 | 1.30 | 0.80 |
| CM 25 | - | - | 0.30 | 0.90 | 1.30 | 1.40 | 1.70 | 1.05 |
| DC 60 | 0.60 | 0.85 | 1.00 | 1.15 | 1.20 | 1.20 | 1.30 | 1.15 |
| DC 80 | 0.75 | 1.10 | 1.25 | 1.45 | 1.50 | 1.60 | 1.65 | 1.50 |
| DC 100 | 0.80 | 1.10 | 1.30 | 1.55 | 1.70 | 1.65 | 1.75 | 1.55 |
| Tetrasodium EDTA | <0.1 | 0.15 | 0.65 | 2.40 | 2.75 | 3.30 | 3.75 | 2.50 |
| NTA | - | - | - | - | <0.1 | 2.90 | 3.65 | 4.15 |
| Na tripolyphosphate | - | - | - | 0.15 | 0.70 | 2.75 | 3.10 | 2.75 |

**Claims**

1. A method for sequestering metal ions at a pH lower than 6, wherein as sequestering agent a fructan polycarboxylic acid containing on average at least 0.05 carboxyl groups per monosaccharide unit is used.

2. A method according to claim 1, wherein the pH is between 3 and 5.

3. A method according to claim 1 or 2, wherein the metal ions are selected from the group of calcium and magnesium ions, or combinations thereof.

4. A method according to any one of the preceding claims, wherein the fructan polycarboxylic acid is based on inulin or a derivative thereof.

5. A method according to claim 4, wherein the fructan polycarboxylic acid is dicarboxy inulin.

6. A method according to any one of the preceding claims, wherein the fructan polycarboxylic acid contains between 0.5 and 3 carboxyl groups per monosaccharide unit.

7. A cleaning composition with a pH lower than 6, containing a fructan polycarboxylic acid which contains on average at least 0.05 carboxyl groups per monosaccharide unit, as sequestering agent.

8. A cleaning composition according to claim 7, being a detergent, bathroom cleaner, (antistatic) plastic cleaner, washing-up liquid, cleaner for cleaning-in-place processes, membrane cleaner or printing press cleaner.

9. A cleaning composition according to claim 7 or 8, wherein the sequestering agent is present in an amount of 0.5 to 20, preferably of 1 to 10 % by weight, based on the weight of the cleaning composition.

**Patentansprüche**

1. Verfahren zum Maskieren von Metallionen bei einem pH unter 6, **dadurch gekennzeichnet, dass** als Maskierungsmittel eine Fructan-Polycarbonsäure verwendet wird, die durchschnittlich mindestens 0,05 Carboxylgruppen je Monosaccharid-Einheit enthält.

2. Verfahren nach Anspruch 1, **dadurch gekennzeichnet, dass** der pH zwischen 3 und 5 liegt.

3. Verfahren nach Anspruch 1 oder 2, **dadurch gekennzeichnet, dass** die Metallionen aus der Gruppe Calcium- und Magnesiumionen oder Kombinationen davon gewählt sind.

4. Verfahren nach einem der vorhergehenden Ansprüche, **dadurch gekennzeichnet, dass** die Fructan-Polycarbonsäure auf Inulin oder einem Derivat davon basiert.

5. Verfahren nach Anspruch 4, **dadurch gekennzeichnet, dass** die Fructan-Polycarbonsäure Dicarbon-Inulin ist.

6. Verfahren nach einem der vorhergehenden Ansprüche, **dadurch gekennzeichnet, dass** die Fructan-Polycarbonsäure zwischen 0,5 und 3 Carboxylgruppen je Monosaccharid-Einheit enthält.

7. Reinigungszusammensetzung mit einem pH unter 6, die als Maskierungsmittel eine Fructan-Polycarbonsäure enthält, die durchschnittlich mindestens 0,05 Carboxylgruppen je Monosaccharid-Einheit enthält.

8. Reinigungszusammensetzung nach Anspruch 7, die ein Waschmittel, ein Badreiniger, ein (antistatischer) Kunststoffreiniger, eine Waschflüssigkeit, ein Reiniger für Reinigung-ander-Verwendungsstelle-Prozesse, ein Membranreiniger oder ein Druckmaschinenreiniger ist.

9. Reinigungszusammensetzung nach Anspruch 7 oder 8, **dadurch gekennzeichnet, dass** das Maskierungsmittel in einer Menge von 0,5 bis 20, vorzugsweise 1 bis 10, Masse-%, bezogen auf die Masse der Reinigungszusammensetzung, vorhanden ist.

**Revendications**

1. Procédé de séquestration d'ions métalliques à un pH inférieur à 6, dans lequel en tant qu'agent séquestrant, un poly(acide carboxylique) de fructane contenant en moyenne au moins 0,05 groupe carboxyle par motif de monosaccharide est utilisé.

**2.** Procédé selon la revendication 1, dans lequel le pH est compris entre 3 et 5.

**3.** Procédé selon la revendication 1 ou 2, dans lequel les ions métalliques sont choisis dans le groupe des ions calcium et magnésium, ou de combinaisons de ceux-ci.

**4.** Procédé selon l'une quelconque des revendications précédentes, dans lequel le poly(acide carboxylique) de fructane est à base d'insuline ou d'un dérivé de celle-ci.

**5.** Procédé selon la revendication 4, dans lequel le poly(acide carboxylique) de fructane est la dicarboxyinsuline.

**6.** Procédé selon l'une quelconque des revendications précédentes, dans lequel le poly(acide carboxylique) de fructane contient entre 0,5 et 3 groupes carboxyle par motif de monosaccharide.

**7.** Composition de nettoyage ayant un pH inférieur à 6, contenant un poly(acide carboxylique) de fructane qui contient en moyenne au moins 0,05 groupe carboxyle par motif de monosaccharide, en tant qu'agent séquestrant.

**8.** Composition de nettoyage selon la revendication 7, qui est un détergent, un produit de nettoyage de salle de bain, un produit de nettoyage de matières plastiques (antistatique), un liquide vaisselle, un produit de nettoyage pour des procédés de nettoyage sur place, un produit de nettoyage de membrane ou un produit de nettoyage de presse d'impression.

**9.** Composition de nettoyage selon la revendication 7 ou 8, dans laquelle l'agent séquestrant est présent en une quantité de 0,5 à 20, de préférence de 1 à 10 % en poids, par rapport au poids de la composition de nettoyage.